# EUROPEAN PATENT SPECIFICATION

(11) **EP 1 584 240 B1**
(45) Date of publication and mention of the grant of the patent: **10.10.2012**
(21) Application number: 05007035.8
(22) Date of filing: 31.03.2005
(51) Int. Cl.: A23F 3/34

(54) **Compositions for herbal teas enriched with dried plant extracts**
Mit getrockneten Pflanzenextrakten angereicherte Zubereitungen für Kräutertees
Compositions pour tisanes enrichies en extraits séchés de plantes

(30) Priority: 08.04.2004 IT MI20040696
(43) Date of publication of application: 12.10.2005
(73) Proprietor: ABOCA S.p.A., 52037 San Sepolcro (Ar) (IT)
(72) Inventor: Mercati, Valentino, 52037 San Sepolcro (AR) (IT)
(74) Representative: Predazzi, Valentina

(56) References cited:
- EP-A- 0 249 853
- WO-A-03/037096
- WO-A-2004/016092
- DE-A1- 3 110 011
- DE-C- 814 701
- DE-U1- 29 811 773
- US-A1- 2004 052 880
- PATENT ABSTRACTS OF JAPAN vol. 018, no. 334 (C-1216), 24 June 1994 (1994-06-24) & JP 06 078727 A (SOGO INSATSU KOGEI KK), 22 March 1994 (1994-03-22)
- DATABASE WPI Section Ch, Week 200318 Derwent Publications Ltd., London, GB; Class B04, AN 2003-176037 XP002330708 & CN 1 376 393 A (YAN Y) 30 October 2002 (2002-10-30)
- PATENT ABSTRACTS OF JAPAN vol. 012, no. 446 (C-546), 24 November 1988 (1988-11-24) & JP 63 169934 A (TOYO YAKUSHIYOKU KOGYO KK), 13 July 1988 (1988-07-13)
- PATENT ABSTRACTS OF JAPAN vol. 012, no. 139 (C-491), 27 April 1988 (1988-04-27) & JP 62 257344 A (TETSUYOSHI FUKUOKA), 9 November 1987 (1987-11-09)
- DATABASE WPI Section Ch, Week 200512 Derwent Publications Ltd., London, GB; Class B04, AN 1999-562477 XP002330709 & CN 1 076 172 C (BEIQISHEN HEALTH ARTICLE CO LTD DAXINGAN) 19 December 2001 (2001-12-19)

## Description

The present invention relates to herbal teas comprising at least one plant material for conventional herbal teas and at least one extract in the form of a water-dispersible granulate obtainable by extraction from said plant material or a different plant material. Said herbal teas can also be packaged ready for use in monodose filter bags.

JP 63 169 934 discloses a healthy tea comprising a granulated plant essence.

The use of plant material to infuse in hot drinks for the preparation of tea and herbal teas has obviously been known for a very long time. With the introduction of filter bags onto the market, the use of herbal teas has increased in view of their practicality. In general, said bags consist of a porous, permeable fabric, usually made of a cellulose material, into which appropriate quantities of plant material suitable for the preparation of herbal teas are inserted. Examples of plant materials commonly used in herbal teas are green or black tea leaves, camomile flowers, butcher's broom and black cohosh roots, passion flower tips, dog rose fruits, karkadé calyxes, mallow leaves and flowers, lime flowers and floral bracts, mint leaves, lemon balm leaves, verbena leaves, fennel seeds, etc..

Said plant materials are dried and chopped before use to form what is known as the "herbal tea cut".

Herbal teas are a particularly pleasant form of administration of phytotherapeutic active ingredients; however, various problems are involved which limit their application possibilities.

For example, a traditional herbal tea is hard to standardize in terms of active ingredients, due to the natural variability of the plants that make it up and to the different time and temperature conditions of the infusion made by the user. Among other things, active ingredients with a mainly lipophilic nature are only extracted to a minimal extent by the hot water normally used to make herbal teas.

Not all the plants used for their activity in the formula of herbal teas have a pleasant flavour, so it is often necessary to include in the composition a plant or mixture of plants which make the flavour of the product more acceptable.

These problems are solved according to this invention by adding to plant material for traditional herbal teas suitable amounts of dried extracts of the same or other plants, in order to:
- enrich it with active ingredients until it contains quantities similar to those obtainable with other concentrated forms of administration such as tablets, capsules, drops and fluids
- provide a standard dose of the active ingredients characterizing the desired activity profile
- allow the administration in the form of herbal teas even of active ingredients which cannot be extracted under normal herbal tea preparation conditions due to their mainly lipophilic characteristics
- improve the organoleptic characteristics of the product.

The extracts are preferably freeze-dried aqueous or hydroethanolic extracts, and are used to produce granulates which can be obtained with known techniques, as described, for example, in EP 1075830.

According to said granulation technique, the dried extracts and/or powders of one or more medicinal herbs are first mixed in a suitable ratio. Said mixture is made to fall regularly from a hopper, and a jet of steam at atmospheric pressure is directed at it for a few fractions of a second, followed by the introduction of hot air. In this way the steam is eliminated and a drying process that consolidates the granules produced is happened. The process described produces a product without the unfavourable hygroscopic characteristics of the starting extracts and with excellent flowability, and does not require the use of technological adjuvants to stabilize the granules, which consequently consist of 100% plant ingredients, the mixtures of which are specifically formulated according to the required use.

The particle size of the granulates obtained is compatible with their use mixed with the various "herbal tea cuts" of traditional plants.

The herbal teas and filter bags do not require any adaptation, and can be packaged with conventional plant and machinery.

Examples of plant materials for conventional herbal teas include black cohosh, passion flower, sage, liquorice, star anise, butcher's broom, camomile, centella, witch hazel, red vine, mint, green tea, black tea, fennel, lime, lemon balm, mallow, dog rose, ginkgo, karkadé, senna, java tea, rooibos tea, bilberry, goldenrod, grindelia, artichoke and dandelion.

Accordingly, the present invention relates to composition for herbal teas comprising at least one plant material for conventional herbal teas and one of the following mixtures of dry extracts in the form of a water-dispersible granulate: black cohosh root dry extract 50% + passion flower dry extract 50%; butcher's broom root dry extract 21.8% + red vine leaves dry extract 31.3% + powdered peppermint 46.9%; dandelion root dry extract 68% + milk thistle seeds dry extract 10% + java tea leaves dry extract 22%; camomile flowers dry extract 80% + powdered lemon balm leaves 20%.

The herbal teas according to the invention are packaged in 1 kg packs, suitably protected against light and humidity; the extracts can be present in percentages ranging between approx. 2% and approx. 30% in weight of the total content. The recommended dose is 1 to 5 g of composition in 150 ml of water.

The sachets according to the invention generally take the form of a monodose bag made of cotton or other cellulose material, and typically contain 0.5 to 4 g of the composition. The extracts can be present in percentages ranging between approx. 2% and approx. 30% in weight of the total content of the filter, obviously depending on the type of extract and the active ingredient content.

The following examples illustrate the invention in greater detail.

### COMPARATIVE EXAMPLE 1

Disclosed is a herbal tea characterized by the presence of black cohosh root as the main ingredient responsible for the activity of the product.

2 g of root with an 0.32% actein+deoxyactein content is placed in 150 ml of water at 90°C for 5 minutes and filtered through a narrow-mesh strainer. The results of the concentrations of actein and deoxyactein extracted in the herbal tea compared with the theoretical value are set out in Table 1 below.

**TABLE 1**

| **Plant** | **Active ingredients found** | **Theoretical active ingredients** | **% of active ingredients extracted** |
|---|---|---|---|
| Black cohosh | Actein + deoxyactein 0.004 mg/ml | Actein + deoxyactein 0.043 mg/ml | 10% |

### COMPARATIVE EXAMPLE 2

### Herbal tea

Composition per 100 g of product:

| **INGREDIENTS** | **%** |
|---|---|
| Black cohosh herbal tea cut | 31.25 |
| Passion flower herbal tea cut | 31 |
| Liquorice herbal tea cut | 27 |
| Sage herbal tea cut | 8 |
| Star anise herbal tea cut | 2.75 |

2 g of herbal tea is placed in 150 ml of water at 90°C for 5 minutes, and filtered through a narrow-mesh strainer. The results of the concentrations of actein and deoxyactein extracted in the composite herbal tea compared with the theoretical value are set out in Table 2 below.

**TABLE 2**

| **Plant** | **Active ingredients found** | **Theoretical active ingredients** | **% of active ingredients extracted** |
|---|---|---|---|
| Black cohosh | Actein + deoxyactein 0.0015 mg/ml | Actein + deoxyactein 0.013 mg/ml | 11.5% |

### EXAMPLE 1

### Herbal tea

Composition per 100 g of product:

| **INGREDIENTS** | **%** |
|---|---|
| Passion flower herbal tea cut | 31 |
| Liquorice herbal tea cut | 27 |
| Star anise herbal tea cut | 25 |
| **Granulate** constituted by black cohosh root dry extract 50% (actein + deoxyactein content: 2.23%) + passion flower dry extract 50% | **9** |
| Sage herbal tea cut | **8** |

2 g of herbal tea is placed in 150 ml of water at 90°C for 5 minutes, and filtered through a narrow-mesh strainer. The results of the concentrations of actein and deoxyactein extracted in the composite herbal tea compared with the theoretical value are set out in Table 3 below.

**TABLE 3**

| **Plant** | **Active ingredients found** | **Theoretical active ingredients** | **% of active ingredients extracted** |
|---|---|---|---|
| Black cohosh | Actein + deoxyactein 0.0119 mg/ml | Actein + deoxyactein 0.013 mg/ml | 91.5% |

The data reported above demonstrate that the filter bags containing the extracts according to the invention guarantee the standardization of the product, and above all allow much greater extraction of the active ingredients.

### COMPARATIVE EXAMPLE 3

This example describes herbal teas based on butcher's broom and red vine. A filter containing 2 g of butcher's broom root with a 2.5% saponins content is immersed in 150 ml of water at 90°C for 5 minutes. The results of the concentrations of saponins extracted in the herbal tea compared with the theoretical value are set out in Table 4 below.

**TABLE 4**

| **Plant** | **Active ingredients found** | **Theoretical active ingredients** | **% of active extracted** |
|---|---|---|---|
| Butcher's broom | Total saponins 1.86 mg/ml | Total saponins 3.33 mg/ml | 56% |

A filter containing 2 g of red vine leaves with an 0.4% anthocyanins content is immersed in 150 ml of water at 90°C for 5 minutes. The results of the anthocyanins concentrations extracted in the herbal tea compared with the theoretical value are set out in Table 5 below.

**TABLE 5**

| **Plant** | **Active ingredients** | **Theoretical active ingredients** | **% of active ingredients extracted** |
|---|---|---|---|
| Red vine | Total anthocyanins 0.023 mg/ml | Total anthocyanins 0.053 mg/ml | 44% |

### COMPARATIVE EXAMPLE 4

A 2 g filter bag has the following percentage composition:

| **INGREDIENTS** | **%** |
|---|---|
| Butcher's broom herbal tea cut | 34 |
| Liquorice herbal tea cut | 18 |
| Red vine herbal tea cut | 17 |
| Centella herbal tea cut | 16 |
| Witch hazel herbal tea cut | 15 |

The 2 g filter is immersed in 150 ml of water at 90°C for 5 minutes. The results of the saponins and anthocyanins concentrations extracted in the herbal tea compared with the theoretical value are set out in Table 6 below.

**TABLE 6**

| **Plant** | **Active ingredients found** | **Theoretical active ingredients** | **% of active ingredients extracted** |
|---|---|---|---|
| Butcher's broom | Total saponins 0.057 mg/ml | Total saponins 0.113 mg/ml | 50.4% |
| Red vine | Total anthocyanins 0.0038 mg/ml | Total anthocyanins 0.01 mg/ml | 38% |

### EXAMPLE 2

### 2 g filter sachet

Composition per 100 g of product:

| **INGREDIENTS** | **%** |
|---|---|
| Butcher's broom herbal tea cut | 20 |
| Liquorice herbal tea cut | 18.5 |
| **Granulate** constituted by butcher's broom dry extract (saponins content: 10%) 21.8% + red vine dry extract (anthocyanins content: 1.3%) 31.3% + powdered peppermint 46.9% | **16** |
| Centella herbal tea cut | 16 |
| Witch hazel herbal tea cut | 15 |
| Red vine herbal tea cut | 14.5 |

The filter is immersed in 150 ml of water at 90°C for 5 minutes. The results of the saponins and anthocyanins concentrations extracted in the herbal tea compared with the theoretical value are set out in Table 7 below.

**TABLE 7**

| **Plant** | **Active ingredients found** | **Theoretical active ingredients** | **% of active ingredients extracted** |
|---|---|---|---|
| Butcher's broom | Total saponins 0.111 mg/ml | Total saponins 0.113 mg/ml | 98.2% |
| Red vine | Total anthocyanins 0.0096 mg/ml | Total anthocyanins 0.01 mg/ml | 96% |

The data reported above demonstrate that the filter bags containing the extracts according to the invention guarantee the standardization of the product, and above all allow much greater extraction of the active ingredients.

A further advantage is that the desired quantity of plants useful to improve the flavour of the herbal tea (such as peppermint) can be added.

## Claims

1. Compositions for herbal teas comprising at least one plant material for conventional herbal teas and one of the following mixtures of dry extracts in the form of a water-dispersible granulate:
black cohosh root dry extract 50% + passion flower dry extract 50%;
butcher's broom root dry extract 21.8% + red vine leaves dry extract 31.3% + powdered peppermint 46.9%;
dandelion root dry extract 68% + milk thistle seeds dry extract 10% + java tea leaves dry extract 22%;
camomile flowers dry extract 80% + powdered lemon balm leaves 20%.

2. Compositions as claimed in claim 1, wherein the extract is a dried aqueous or hydroethanolic extract.

3. Compositions as claimed in claim 2, wherein the plant material for conventional herbal teas is selected from black cohosh, passion flower, sage, liquorice, star anise, butcher's broom, camomile, centella, witch hazel, red vine, mint, green tea, black tea, fennel, lime, lemon balm, mallow, dog rose, ginkgo, karkadé, senna, java tea, rooibos tea, bilberry, goldenrod, grindelia, artichoke and dandelion.

4. Compositions as claimed in any one of claims 1 to 3, comprising black cohosh, passion flower, liquorice, sage and star anise as plant materials for herbal teas, and granular extract of black cohosh titrated in actein and deoxyactein.

5. Compositions as claimed in any one of claims 1 to 3, comprising butcher's broom, liquorice, centella, witch hazel and red vine as plant materials for herbal teas, butcher's broom extracts titrated in saponins, and red vine extracts titrated in anthocyanins.

6. Filter bags containing the compositions described in the claims 1 to 5.

7. Bags as claimed in claim 6 in the form of single-dose cotton bags.

## Patentansprüche

1. Zusammensetzungen für pflanzliche Tees, umfassend mindestens ein Pflanzenmaterial für herkömmliche pflanzliche Tees und eines der folgenden Gemische von Trockenextrakten in der Form eines Wasser-dispergierbaren Granulats:
Frauenwurzeltrockenextrakt 50% + Passionsblumentrockenextrakt 50%;
Dornmyrtenwurzeltrockenextrakt 21,8% + Trockenextrakt roter Weinblätter 31,3% + pulverisierte Pfefferminze 46,9%;
Löwenzahn-Wurzeltrockenextrakt 68% + Mariendistelsamentrockenextrakt 10% + Javateeblättertrockenextrakt 22%,
Kamillenblütentrockenextrakt 80% + pulverisierte Zitronenmelissenblätter 20%.

2. Zusammensetzungen gemäß Anspruch 1, wobei der Extrakt ein getrockneter wässriger oder wässrig-ethanolischer Extrakt ist.

3. Zusammensetzungen gemäß Anspruch 2, wobei das Pflanzenmaterial für herkömmliche Pflanzentees ausgewählt ist aus Frauenwurzel, Passionsblume, Salbei, Lakriz, Sternanis, Dornmyrte, Kamille, Tigergras, Zaubernuss, rotem Wein, Minze, grünem Tee, schwarzem Tee, Fenchel, Limette, Zitronenmelisse, Malve, Hagebutte, Ginkgo, Hibiskus, Sennes, Javatee, Rotbuschtee, Heidelbeere, Goldrute, Grindelie, Artischocke und Löwenzahn.

4. Zusammensetzungen gemäß einem der Ansprüche 1 bis 3, umfassend Frauenwurzel, Passionsblume, Lakritz, Salbei und Sternanis als Pflanzenmaterialien für Pflanzentees, und einen granulären Extrakt von Frauenwurzel, der in Actein und Deoxyactein titriert ist.

5. Zusammensetzungen nach einem der Ansprüche 1 bis 3, umfassend Dornmyrte, Lakritze, Tigergras, Zaubernuss und roten Wein als Pflanzenmaterial für Pflanzentees, Dornmyrtenextrakte, die in Saponinen titriert sind, und Extrakte von rotem Wein, der in Anthozyaninen titriert ist.

6. Filterbeutel, umfassend die in den Ansprüchen 1 bis 5 beschriebenen Zusammensetzungen.

7. Beutel gemäß Anspruch 6 in der Form von Einzeldosisbaumwollbeuteln.

## Revendications

1. Compositions pour tisanes, comprenant au moins une matière végétale pour tisane classique et l'un des mélanges suivants d'extraits secs, sous forme de granulés dispersables dans de l'eau :
- 50 % d'extrait sec de racine d'actée à grappes noires et 50 % d'extrait sec de passiflore ;
- 21,8 % d'extrait sec de racine de fragon épineux, 31,3 % d'extrait sec de feuilles de vigne rouge et 46,9 % de menthe poivrée en poudre ;
- 68 % d'extrait sec de racine de pissenlit, 10 % d'extrait sec de graines de chardon-marie et 22 % d'extrait sec de feuilles de thé de Java ;
- 80 % d'extrait sec de fleurs de camomille et 20 % de feuilles de mélisse citronnée en poudre.

2. Compositions conformes à la revendication 1, dans lesquelles l'extrait est un extrait aqueux ou hydro-éthanolique séché.

3. Compositions conformes à la revendication 2, dans lesquelles la matière végétale pour tisane classique est choisie parmi les suivantes : actée à grappes noires, passiflore, sauge, réglisse, anis étoilé, fragon épineux, camomille, centella, hamamélis, vigne rouge, menthe, thé vert, thé noir, fenouil, citron vert, mélisse citronnée, mauve, églantier, gingko, karkadé, séné, thé de Java, rooibos, airelle, verge d'or, grindélia, artichaut et pissenlit.

4. Compositions conformes à l'une des revendications 1 à 3, comprenant de l'actée à grappes noires, de la passiflore, de la réglisse, de la sauge et de l'anis étoilé, en tant que matières végétales pour tisanes, et de l'extrait d'actée à grappes noires en granulés, titré en actéine et en désoxy-actéine.

5. Compositions conformes à l'une des revendications 1 à 3, comprenant du fragon épineux, de la réglisse, de la centella, de l'hamamélis et de la vigne rouge, en tant que matières végétales pour tisanes, de l'extrait de fragon épineux, titré en saponines, et de l'extrait de vigne rouge, titré en anthocyanines.

6. Sachets-filtres contenant les compositions conformes à l'une des revendications 1 à 5.

7. Sachets conformes à la revendication 6, sous forme de sachets en coton à dose unique.
